(19)

Europäisches Patentamt
European Patent Office
Office européen des brevets

(11) **EP 4 431 584 A1**

(12) **EUROPEAN PATENT APPLICATION**
published in accordance with Art. 153(4) EPC

(43) Date of publication:
**18.09.2024 Bulletin 2024/38**

(21) Application number: **22892835.4**

(22) Date of filing: **09.11.2022**

(51) International Patent Classification (IPC):
*C10G 3/00* (2006.01)     *B01J 29/40* (2006.01)
*B01J 29/44* (2006.01)     *C11C 3/10* (2006.01)

(52) Cooperative Patent Classification (CPC):
**B01J 29/40; B01J 29/44; C10G 3/00; C11C 3/10;**
**Y02P 30/20**

(86) International application number:
**PCT/JP2022/041796**

(87) International publication number:
**WO 2023/085337 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2021 JP 2021182575**

(71) Applicants:
• **National University Corporation Tokyo University of Agriculture and Technology**
  **Fuchu-shi, Tokyo 183-8538 (JP)**
• **Green Power Development Corporation of Japan**
  **Tokyo 101-0003 (JP)**

(72) Inventor: **QIAN, Eika**
  **Fuchu-shi, Tokyo 183-8538 (JP)**

(74) Representative: **Murgitroyd & Company**
  **165-169 Scotland Street**
  **Glasgow G5 8PL (GB)**

(54) **BIO-JET FUEL PRODUCTION METHOD AND BIO-JET FUEL PRODUCTION CATALYST USED IN SAID METHOD**

(57) In order to provide a method of producing a bio-jet fuel, the method having a high energy-saving property and enabling easy production of a high-quality bio-jet fuel, and a catalyst for producing a bio-jet fuel to be used in the method, a biomass-derived oil containing a free fatty acid, a hydrocarbon, and a triacylglycerol is subjected to a reforming treatment step of performing decarbonation, hydrogenation, isomerization, and decomposition using a catalyst, which is obtained by causing a solid acid catalyst to support a solid base catalyst, under the condition of a reaction temperature of from 200°C to 450°C to obtain a bio-jet fuel from a biomass resource.

Fig. 2

EP 4 431 584 A1

**Description**

Technical Field

The present invention relates to a method of producing a bio-jet fuel for obtaining a bio-jet fuel by reforming a bio-oil derived from a biomass, and to a catalyst for producing a bio-jet fuel.

Background Art

In recent years, a global warming issue caused by carbon dioxide has become an international environmental issue. With regard to this issue, reduction of greenhouse gases in each country has been required by, for example, a Framework Convention on Climate Change or the Kyoto Protocol. A carbon dioxide emission amount in Japan in fiscal 2018 was 1,138,000,000 tons, accounting for 3.4% of a carbon dioxide emission amount in the world. Accordingly, it can hardly be said that sufficient reduction of greenhouse gases has been achieved. An amount of carbon dioxide emitted at the time of energy conversion accounts for a ratio as high as 40.1% out of the carbon dioxide emission amount. Accordingly, in order to achieve a sustainable society, a change from the conventional production of energy and chemical products mainly using a fossil resource to a technological development that enables production of a clean and renewable resource has been required.

Under such circumstances, a biofuel has been paid attention to as an alternative product to a fossil fuel that can achieve carbon neutrality from the viewpoint of suppressing carbon dioxide emission. With regard to the biofuel, carbon dioxide in the atmosphere is not increased even by its use because carbon dioxide emitted by its combustion is derived from carbon dioxide absorbed from the atmosphere in a growth process of a biomass. Accordingly, carbon neutrality, which is a concept that an emission amount of carbon dioxide and an absorption amount of carbon dioxide are the same when production or a biological activity is performed, can be achieved.

As such biofuel that achieves carbon neutrality, there is a bio-jet fuel in addition to a bioethanol fuel and a biodiesel fuel that have been widely spread in recent years. The spread of the bio-jet fuel is in a slower state as compared to that of the bioethanol fuel or the biodiesel fuel due to its strict production standard or the like, but about 1.5 billion barrels to about 1.7 billion barrels (238 $Mm^3$ to 270 $Mm^3$ equivalent) of a typical jet fuel is annually consumed in the aviation industry in the world, and hence rapid development of a high-quality bio-jet fuel has been required.

A method of producing a bio-jet fuel from a biomass resource has heretofore been performed by: subjecting a biomass-derived raw material oil a biomass to decarbonation or deoxidation; subjecting the resultant to hydrogenation treatment to generate a hydrocarbon; and subjecting the hydrocarbon to isomerization and decomposition to generate a $C_{7-14}$ isomerized hydrocarbon serving as a bio-jet fuel.

As a method of producing such bio-jet fuel, for example, in Patent Literature 1, there is a disclosure of a method of producing a diesel fuel boiling range product and an aviation fuel boiling range product from a renewable feedstock, the method including: (a) subjecting a renewable feedstock to treatment by hydrogenation and deoxidation in a first reaction zone using a catalyst under such a reaction condition that hydrogen is present to obtain a product stream of the first reaction zone including a hydrocarbon fraction containing hydrogen, water, carbon dioxide, a paraffin in a diesel fuel boiling range, and a paraffin in an aviation fuel boiling range; (b) selectively separating a gas stream containing at least part of hydrogen, water, and carbon dioxide from the product stream of the first reaction zone from a residual stream containing at least paraffin in a high-temperature and high-pressure hydrogen stripper; (c) introducing the residual stream to a second reaction zone under the isomerization and selective cracking conditions so that the stream may be brought into contact with an isomerization and selective hydrocracking catalyst, followed by selective hydrocracking of at least part of paraffin and isomerization of at least part of paraffin to generate a stream containing a large amount of branched paraffin; (d) cooling the stream containing a large amount of branched paraffin and the gas stream to separate a gas component containing at least hydrogen and carbon dioxide from a liquid hydrocarbon component and a water component; and (e) separating the liquid hydrocarbon component to an overhead stream, a diesel fuel boiling range product, and an aviation fuel boiling range product.

In Patent Literature 2, there is a disclosure of a method of generating a hydrocarbon, including: a first stage of providing a condition, which is sufficient for subjecting an oil of biological origin and a hydrogen gas to hydrodeoxygenation under the presence of a hydrodeoxygenation catalyst, to generate n-paraffin; a second stage of providing a condition, which is sufficient for subjecting n-paraffin and the hydrogen gas to isomerization under the presence of an isomerization catalyst, to generate an isoparaffin and a separated fraction; and a third stage of recirculating a fraction that boils at 200°C or more under the atmospheric pressure obtained between the second stage and reisomerization to perform isomerization under the presence of the isomerization catalyst.

In Patent Literature 3, there is a disclosure of a method of converting a triacylglyceride-containing oil into a crude oil precursor and/or a distilled hydrocarbon fuel, the method including the following operations: subjecting a mixture of the triacylglyceride-containing oil, water, and diatomic hydrogen to a reaction at a temperature in the range of from about 250°C to about 560°C and at a pressure of more than about 75 bar to convert at least part of triacylglyceride, followed by the recovery of a reaction effluent containing water and one or more kinds of an isoolefin, an isoparaffin, a cycloolefin, a cycloparaffin, and aromatic compounds; and subjecting the reaction effluent to hydrogen treatment to form a hydrogen-treated effluent.

Citation List

Patent Literature

[PTL 1] JP 2011-515539 A
[PTL 2] JP 2011-526640 A
[PTL 3] JP 2015-531430 A

Summary of Invention

Technical Problem

However, each of the methods as described in Patent Literatures 1 and 2 involves a two-stage process including a hydrodeoxygenation treatment step and an isomerization decomposition step. Accordingly, there is a problem in that large energy consumption is involved, and high cost is required in the production of a bio-jet fuel.

In the method of Patent Literature 3, a facility that withstands high pressure and a large amount of hydrogen are required because an oil and fat is subjected to hydrothermal treatment under a high pressure of more than about 75 bar, followed by a hydrogenation reaction. Accordingly, there is a problem in that large energy consumption is involved, and high cost is required in the production of a bio-jet fuel.

In addition, in the hydrodeoxygenation reaction of each of Patent Literatures 1 and 2, carbon monoxide or a hydrocarbon having a short carbon chain is generated as a byproduct, carbon monoxide or the hydrocarbon having a short carbon chain serving as the byproduct reacts with hydrogen, and hence a consumption of hydrogen becomes large. Accordingly, there occurs a problem such as an increase in cost.

In order to solve the above-mentioned problem, the inventor of the present application has focused on a bio-oil obtained by subjecting a biomass resource to pyrolysis using a superheated steam and on a bifunctional catalyst obtained by causing a solid acid catalyst to support a solid base catalyst. Thus, the inventor has achieved the inventions of a method of producing a bio-jet fuel and a catalyst for producing a bio-jet fuel of the present application.

The present invention is directed to provide a method of producing a bio-jet fuel, the method having a high energy-saving property and enabling easy production of a high-quality bio-jet fuel, and a catalyst for producing a bio-jet fuel to be used in the method.

Solution to Problem

In order to solve the above-mentioned problem, the invention of claim 1 includes a reforming treatment step of subjecting a biomass-derived oil containing a free fatty acid, a hydrocarbon, and a triacylglycerol to decarbonation, hydrogenation, isomerization, and decomposition using a catalyst, which is obtained by causing a solid acid catalyst to support a solid base catalyst, under the condition of a reaction temperature of from 200°C to 450°C.

In the invention of claim 2, the biomass-derived oil is a bio-oil obtained by heating a biomass resource and cooling the generated pyrolysis gas.

In the invention of claim 3, the bio-oil of claim 2 is obtained by heating the biomass resource at from 200°C to 450°C and cooling the generated pyrolysis gas.

In the invention of claim 4, the bio-oil of claim 2 or 3 is obtained by heating the biomass resource using heating means including jetting a superheated steam and cooling the generated pyrolysis gas.

In the invention of claim 5, the bio-oil of any one of claims 2 to 4 is obtained by heating coconut fruit serving as the biomass resource and cooling the generated pyrolysis gas.

In the invention of claim 6, a usage amount of the catalyst of any one of claims 1 to 5 is from 5 wt% to 15 wt% with respect to the biomass-derived oil.

In the invention of claim 7, the reforming treatment step of any one of claims 1 to 6 is performed in a reaction vessel in which a hydrogen gas is sealed at a pressure of from 0 MPa to 2 MPa.

In the invention of claim 8, the reforming treatment step of any one of claims 1 to 7 is performed for a period of time in the range of from 3 hours to 6 hours.

In the invention of claim 9, the solid acid catalyst of the catalyst of any one of claims 1 to 8 is a zeolite.

In the invention of claim 10, the zeolite serving as the solid acid catalyst of the catalyst of claim 9 is ZSM-5-type zeolite.

In the invention of claim 11, the solid base catalyst of the catalyst of any one of claims 1 to 10 contains a Group 2 metal oxide.

In the invention of claim 12, the Group 2 metal oxide serving as the solid base catalyst of the catalyst of claim 11 is one kind or two or more kinds selected from magnesium oxide, calcium oxide, and barium oxide.

In the invention of claim 13, the solid acid catalyst of the catalyst of any one of claims 1 to 12 is caused to support one or a plurality of metals selected from Group 8, Group 9, and Group 10.

In the invention of claim 14, the one or the plurality of metals selected from Group 8, Group 9, and Group 10 to be supported on the solid acid catalyst of the catalyst of claim 13 are platinum.

The invention of claim 15 is a catalyst for producing a bio-jet fuel, including: a solid acid catalyst; and a solid base catalyst, wherein the solid acid catalyst is caused to support the solid base catalyst.

In the invention of claim 16, the solid acid catalyst of claim 15 is a zeolite.

In the invention of claim 17, the zeolite of claim 16 is ZSM-5-type zeolite.

In the invention of claim 18, the solid base catalyst of any one of claims 15 to 17 contains a Group 2 metal oxide.

In the invention of claim 19, the Group 2 metal oxide of claim 18 is one kind or two or more kinds selected from magnesium oxide, calcium oxide, and barium oxide.

In the invention of claim 20, the solid acid catalyst of any one of claims 15 to 19 is caused to support one or a plurality of metals selected from Group 8, Group 9, and Group 10.

In the invention of claim 21, the one or the plurality of metals selected from Group 8, Group 9, and Group 10 to be supported on the solid acid catalyst of claim 20 are platinum.

Advantageous Effects of Invention

According to the invention of the present application, there is involved a reforming treatment step of subjecting a biomass-derived oil containing a free fatty acid, a hydrocarbon, and a triacylglycerol to decarbonation, hydrogenation, isomerization, and decomposition using a catalyst, which is obtained by causing a solid acid catalyst to support a solid base catalyst, under the condition of a reaction temperature of from 200°C to 450°C, and hence a $C_{7-14}$ isomerized hydrocarbon serving as a bio-jet fuel can be suitably obtained.

A bio-oil to be used in the invention of the present application, which is obtained by heating a biomass resource and cooling the generated pyrolysis gas, has a small amount of a polymer fraction such as a tar content, and hence a coke deposition amount on a catalyst surface is small and reforming to a biofuel can be efficiently performed. In addition, the bio-oil is in an emulsion state with moisture generated by pyrolysis of the biomass resource, and hence, in the reforming treatment step, the decarbonation, the hydrogenation, the isomerization, and the decomposition can be performed without supply of water or hydrogen, or with a small amount of supply of moisture or hydrogen. Accordingly, the production of a bio-jet fuel at low cost can be achieved.

The bio-oil is suitably produced by cooling a pyrolysis gas obtained by heating at a temperature in the range of from 200°C to 450°C. Such bio-oil contains a large amount of a hydrocarbon having 6 to 19 carbon atoms and a free fatty acid, and hence the bio-jet fuel formed of the $C_{7-14}$ isomerized hydrocarbon can be efficiently produced.

A superheated steam is suitably used in the heating of the biomass resource. When the superheated steam is used, the emulsion state with moisture of the bio-oil can be more securely achieved. In addition, the ratio of the hydrocarbon in the bio-oil can be increased.

In addition, the bio-oil can be efficiently and securely produced by using coconut fruit, which contains a large amount of an oil and fat and can be stably supplied, as the biomass resource serving as a raw material of the bio-oil.

In the reforming of the bio-oil, a catalyst obtained by causing the solid acid catalyst to support the solid base catalyst is used. Thus, reforming treatment, such as decarboxylation, isomerization, and decomposition, can be performed at a time. In addition, reforming can be performed at low pressure. Accordingly, energy can be saved, and production of a bio-jet fuel at low cost can be achieved.

In addition, as the solid acid catalyst of the catalyst, a zeolite is preferably used, and ZSM-5-type zeolite is more preferably used because the hydrocarbon in the bio-oil can be suitably isomerized to be decomposed.

In addition, as the solid base catalyst of the catalyst, a Group 2 metal oxide is preferably used, and one kind or two or more kinds selected from magnesium oxide, calcium oxide, and barium oxide are more preferably used because the free fatty acid or the triacylglycerol in the bio-oil can be suitably decarbonated and hydrogenated.

In addition, when the reforming of the bio-oil is performed under the condition of a reaction temperature of from 200°C to 450°C, the bio-oil can be securely reformed.

In addition, when the reforming of the bio-oil is performed in a reaction vessel in which a hydrogen gas is sealed at a pressure of from 0 MPa to 2 MPa, deactivation of the catalyst by adhesion of a tar component thereto is prevented, and hence the bio-oil can be reformed more efficiently.

As described above, according to the present invention, there can be obtained the method of producing a bio-jet fuel, the method having a high energy-saving property and enabling easy production of a high-quality bio-jet fuel, and the catalyst for producing a bio-jet fuel to be used in the method.

Brief Description of Drawings

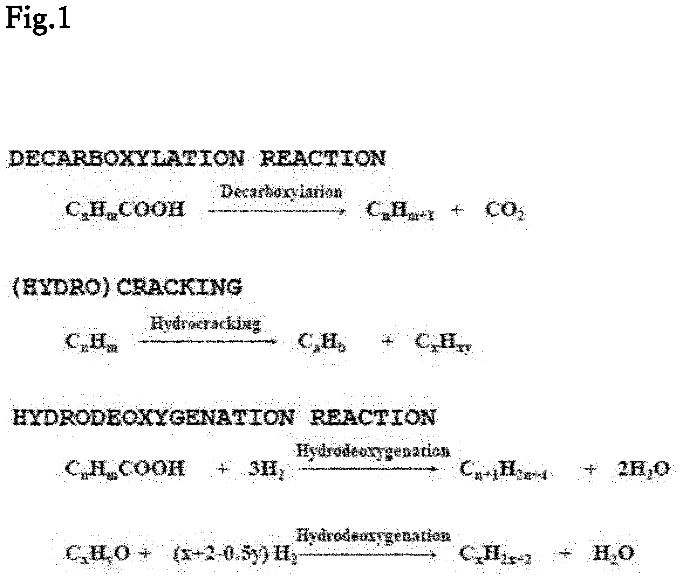

FIG. 1 is a view for showing a method of producing a bio-jet fuel according to the present invention in reaction formulae.
FIG. 2 is a graph for showing a base amount of a catalyst of the present invention.
FIG. 3 is a graph for showing an acid amount of the catalyst of the present invention.

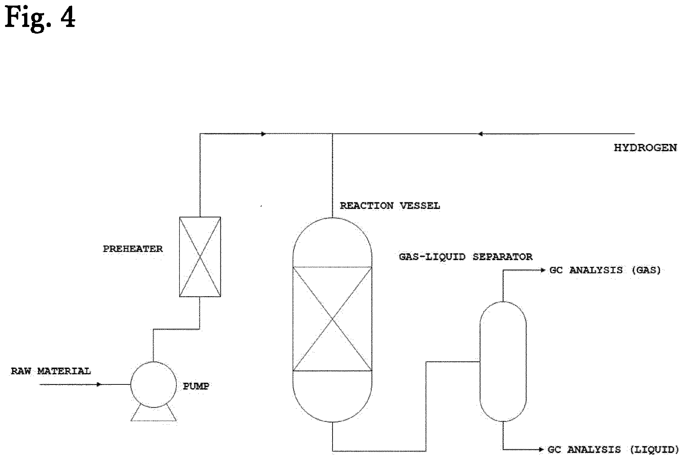

FIG. 4 is an explanatory view for illustrating a fixed-bed flow type reaction apparatus used in Test 5.

Description of Embodiments

Now, one suitable Example according to the present invention is described in detail with reference to the attached drawings.

The invention of the present application is a method of producing a bio-jet fuel, including reforming a biomass-derived oil containing a free fatty acid, a hydrocarbon, and a triacylglycerol.

The biomass-derived oil containing the free fatty acid, the hydrocarbon, and the triacylglycerol is not particularly limited, but a bio-oil obtained by heating a biomass resource and cooling the generated pyrolysis gas is suitable. The biomass resource is not particularly limited except a fossil fuel as long as the biomass resource is derived from animals and vegetables. In order to stably supply and easily produce the bio-oil, a plant seed containing a large amount of the oil and fat is suitably used. Suitable examples thereof include bintaro, bengkoang, polon, jatropha, coconut fruit, palm fruit, and date fruit. Of those, coconut fruit is more suitably used because its endosperm contains a large amount of an oil content.

The bio-oil to be used in the present invention is obtained by heating the biomass resource and cooling the generated pyrolysis gas. As described above, a coke deposition amount on a catalyst surface is small and reforming to a biofuel can be efficiently performed because the bio-oil has a small amount of a polymer fraction such as a tar content.

A superheated steam is suitably used in the heating of the biomass resource. It is not required that the biomass resource be heated with the superheated steam alone, and the biomass resource may be heated by using the steam in combination with any other heating means. The superheated steam used in the heating of the biomass oil is in a mixed state with the pyrolysis gas of the bio-oil. In addition, when the superheated steam is used, the ratio of the hydrocarbon in the bio-oil can be increased. This is probably because the pyrolysis gas generated from the biomass resource is subjected to pyrolysis and steam reforming by being brought into contact with the superheated steam under high temperature.

A temperature at which the biomass resource is heated is suitably from 200°C to 450°C. The bio-oil obtained by heating the biomass resource within the temperature region contains a large amount of a hydrocarbon having 6 to 19 carbon atoms and a free fatty acid, and hence a bio-jet fuel formed of a $C_{7-14}$ isomerized hydrocarbon can be efficiently produced.

A period of time for which the biomass resource is heated is appropriately selected in accordance with, for example, the amount of the biomass resource or the heating temperature, and is not particularly limited.

In the reforming treatment of such bio-oil, a catalyst obtained by causing the solid acid catalyst to support a solid base catalyst is used.

As the solid acid catalyst to be used for the catalyst, there may be used silica alumina, activated alumina, activated clay, or a zeolite. Of those, the zeolite is suitable because the zeolite shows stable availability and high acidity. As the zeolite, there may be used, for example, mordenite, β-zeolite, ZSM-based zeolite, A-type zeolite, X-type zeolite, or Y-type zeolite. Of those, ZSM-5-type zeolite is suitably selected.

As the solid base catalyst to be supported on the solid acid catalyst, there may be used, for example, an alkali metal, an alkali metal hydride, or an alkali metal oxide, and an oxide of a Group 2 alkaline earth metal is suitably used. Of the oxides of the Group 2 alkaline earth metals, one kind or two or more kinds selected from magnesium oxide, calcium oxide, rubidium oxide, and barium oxide are suitably used.

Further, the solid acid catalyst may be caused to support one or a plurality of metals selected from Group 8, Group 9, and Group 10. Of the Group 9 and/or Group 10 metals, platinum may be most suitably used.

The catalyst is produced as follows: a solid base catalyst precursor is dissolved in distilled water; the resultant is impregnated in the solid acid catalyst; the resultant is dried; and the resultant is molded into a pellet shape, and is then fired to provide a catalyst. The method of producing the catalyst is not limited to this method, and the catalyst may be produced by any other method.

The reforming of the bio-oil is performed with a reforming treatment apparatus including a reaction vessel and heating means. In addition, the reaction vessel preferably includes gas injection means that can inject a gas into the reaction vessel, and gas product recovering means for recovering a gas product generated through the reforming of the bio-oil in the reaction vessel. The reforming treatment may be performed by each of a batchwise method and a continuous method. When the reforming treatment is performed by the batchwise method, the reaction vessel in the reforming treatment apparatus can be sealed. When the reforming treatment is performed by the continuous method, a flow type reaction apparatus, which can continuously perform the supply of the bio-oil and the take-out of a product, such as an oil or a gas, after the reforming treatment, is used as a reforming apparatus. The catalyst to be used may be subjected to hydrogenation reduction as pretreatment before the reforming treatment of the bio-oil. The method for the hydrogenation reduction is not particularly limited, but is suitably performed at 400°C for about 3 hours under a hydrogen flow rate of 100 ml/min.

As an example of such reforming treatment, first, the reforming treatment using the batchwise method is described. The reforming treatment using the batchwise method involves accommodating the bio-oil and the catalyst in the reaction vessel of the above-mentioned reforming treatment apparatus and heating the resultant at a reaction temperature of from 200°C to 450°C, to thereby perform reforming of the bio-oil. Hydrogen may be sealed in the reaction vessel at a pressure of from 1 MPa to 5 MPa using the gas injection means. An amount of the catalyst to be accommodated is from 1 wt% to 20 wt%, preferably from 5 wt% to 15 wt% with respect to the bio-oil. Next, the reforming treatment using the continuous method is described. The reforming treatment using the continuous method suitably involves reforming using the above-mentioned flow type reaction apparatus at a reaction temperature of from 200°C to 450°C and a weight hourly space velocity of the bio-oil of from about 5 $h^{-1}$ to about 0.2 $h^{-1}$. When hydrogen is supplied by the reforming treatment using the continuous method, the supply is suitably performed at a hydrogen pressure of from about 0.5 MPa to about 3 MPa and a hydrogen supply amount of from about 100:1 to about 1,200:1 in terms of a volume ratio between hydrogen and the biomass-derived oil.

A period of time for which the reforming treatment is performed is not particularly limited, but the reforming treatment is suitably performed for from 1 hour to 6 hours.

Through such reforming treatment, the $C_7$ to $C_{14}$ isomerized hydrocarbon serving as a main component of the bio-jet fuel is obtained.

<Test 1: Analysis of Catalyst>

The base amount and acid amount of each of the catalysts of the following Examples 1 to 3 were measured.

<Example 1>

ZSM-5-type zeolite was used as a solid acid catalyst, and a catalyst obtained by causing the solid acid catalyst to support 5 mass% of magnesium oxide as a solid base catalyst was produced using the above-mentioned method of producing a catalyst.

<Example 2>

ZSM-5-type zeolite was used as a solid acid catalyst, and a catalyst obtained by causing the solid acid catalyst to support 5 mass% of calcium oxide as a solid base catalyst was produced using the above-mentioned method of producing a catalyst.

<Example 3>

ZSM-5-type zeolite was used as a solid acid catalyst, and a catalyst obtained by causing the solid acid catalyst to support 5 mass% of barium oxide as a solid base catalyst was produced using the above-mentioned method of producing a catalyst.

The base amount was measured by a $CO_2$-TPD method using ChemBET Pulser (manufactured by Quantachrome Instruments).

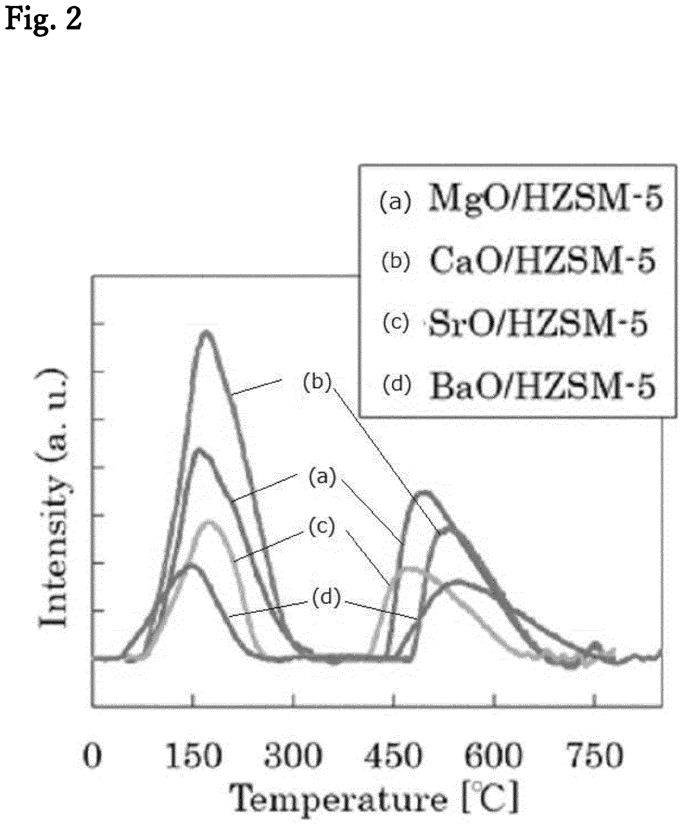

The analysis results are shown in FIG. 2 and Table 1.

Table 1

| | Pore Properties | | | Amount of base sites on MeO/HZM-5 | | Amount of acid sites on MeO/HZSM-5 | |
|---|---|---|---|---|---|---|---|
| | $S_{BET}$ [m²/g] | $V_I$ [cm³/g] | $d_P$ [nm] | Tempera ture [°C] | Amount [μmol-$CO_2$/g-cat.] | Tempera ture [°C] | Amount [μmol-$NH_3$/g-cat.] |
| MgO/ HZSM-5 | 140 | 0.114 | 3.2 5 | 159 | 61.5 | 343 | 231 |
| | | | | 501 | 62.5 | 579 | 56.1 |
| CaO/ HZSM-5 | 148 | 0.105 | 2.8 4 | 171 | 91.1 | 400 | 228 |
| | | | | 532 | 39.7 | 592 | 43.3 |
| SrO/ HZSM-5 | 155 | 0.103 | 2.6 7 | 173 | 32.0 | 371 | 149 |
| | | | | 473 | 45.8 | 569 | 99.4 |
| BaO/ HZSM-5 | 179 | 0.124 | 2.7 8 | 165 | 20.7 | 347 | 157 |
| | | | | 489 | 28.3 | 558 | 165 |

As shown in FIG. 2 and Table 1, a base point was observed in each catalyst, and it was recognized that the catalyst functioned as a catalyst for causing a decarboxylation reaction to obtain a hydrocarbon. In addition, in each catalyst, desorption peaks of $CO_2$ were observed in two regions, that is, a low-temperature region (60°C to 300°C) and a high-temperature region (400°C to 750°C), and the presence of two kinds of base sites was able to be recognized.

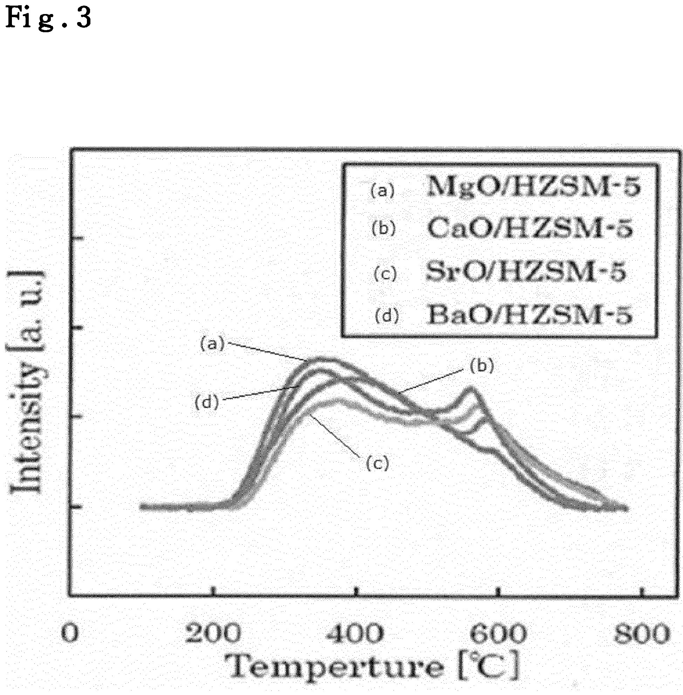

The acid amounts of the respective catalysts were measured by $NH_3$-TPD. The analysis results are shown in FIG. 3 and Table 1.

As shown in FIG. 3 and Table 1, an acid point was observed in each catalyst, and it was recognized that the catalyst functioned as a catalyst for isomerization and decomposition of the hydrocarbon. In addition, in each catalyst, $NH_3$ desorption was observed in a temperature region of from 200°C to 800°C, and the presence of an acid site was able to be recognized.

As described above, in each of the catalysts of Examples 1 to 3, the base point and the acid point were observed. In addition, it was recognized that each catalyst had a sufficient base amount and a sufficient acid amount as a catalyst.

<Test 2: Reforming Test using Catalyst of Example 1>

Next, a liquid product obtained by reforming of a bio-oil using the catalyst of Example 1 of Test 1 was analyzed. In this test, the bio-oil obtained as follows was used: copra, which was an endosperm of coconut, was used as a raw material bio-oil and heated using a superheated steam; and the generated pyrolysis gas was cooled. The results obtained by analyzing the component of the used bio-oil by CHN elemental analysis are shown in Table 2.

Table 2

| CHN analysis (wt%) | | |
|---|---|---|
| C | | 72.2 |
| H | | 1.4 |
| N | | 14.3 |
| Acid Value [mgKOH/g] | | 111.1 |
| Density (g/ml) | | 0.913 |
| Composition (wt%) | | |
| Hydrocarbon | $C_6C_{18}$ (paraffin) | 11.0 |
| | $C_6C_{18}$ (olefin) | 6.48 |
| | Aromatics | 0.57 |
| Oxygenated Compound | | 2.10 |
| Free fatty acid | Hexanoic acid | 0.21 |
| | Octanoic acid | 3.28 |

(continued)

| CHN analysis (wt%) | |
|---|---|
| Decanoic acid | 2.09 |
| Lauric acid | 17.36 |
| Myristic acid | 6.88 |
| Palmitic acid | 3.53 |
| Oleic acid | 1.45 |
| Stearic acid | 0.76 |

A portable reactor Model TPR-1 was used as the reforming apparatus.

The catalyst of Example 1 was pulverized into a size of from 80 mesh to 120 mesh and dried at 110°C for 1 hour before use.

The content of the bio-oil to be reformed was set to 10.0 g, and 0.5 g of the catalyst was used. A hydrogen gas was sealed in a reaction vessel at a pressure of 1.0 MPa. The materials were subjected to a reaction for 3 hours at a reaction temperature of 300°C and a stirring speed of 400 rpm.

The "reaction pressure" as used herein means a pressure at which the hydrogen gas is sealed in the reaction vessel.

The analysis results of the components of the gas product obtained by this operation are shown in Table 3, and the analysis results of the components of the liquid product are shown in Table 4.

In Tables 3 and 4, $M_w$ represents a molecular weight of each component, $V_i$ represents a volume ratio of each component, and $W_{i\,yield}$ represents a weight ratio of each component.

Table 3

| Kind | $M_w$ [g/mol] | $V_i$ [vol%] | $W_{i,\,yield}$ [wt%] |
|---|---|---|---|
| $CH_4$ | 16.04 | 0.52 | 0.04 |
| $C_2H_6$ | 30.07 | 0.28 | 0.04 |
| $C_3H_8$ | 44.10 | 0.54 | 0.12 |
| $i\text{-}C_4H_{10}$ | 58.12 | 0.01 | 0.00 |
| $n\text{-}C_4H_{10}$ | 58.12 | 0.07 | 0.02 |
| $neo\text{-}C_5H_{12}$ | 72.15 | 0.01 | 0.00 |
| $n\text{-}C_5H_{12}$ | 72.15 | 0.05 | 0.02 |
| $n\text{-}C_6H_{12}$ | 86.18 | 0.03 | 0.01 |
| CO | 16.04 | 1.02 | 0.59 |
| $CO_2$ | 44.01 | 6.34 | 1.41 |

Table 4

| Kind | $M_w$ [g/mol] | $W_i$ [wt%] | $W_{i,\,yield}$ [wt%] |
|---|---|---|---|
| 1-hexene | 84.2 | 0.06 | 0.045 |
| hexane | 86.2 | 0.10 | 0.077 |
| hexene | 84.2 | 0.11 | 0.083 |
| benzene | 78.1 | 0.15 | 0.116 |
| cyclohexene | 82.1 | 0.03 | 0.021 |
| 1-heptene | 98.2 | 0.12 | 0.087 |
| heptane | 100.2 | 0.64 | 0.482 |
| heptene | 98.2 | 0.15 | 0.117 |
| heptene | 98.2 | 0.09 | 0.066 |
| toluene | 92.1 | 0.29 | 0.215 |
| 1-octene | 112.2 | 0.10 | 0.078 |
| octane | 114.2 | 0.61 | 0.459 |

(continued)

| Kind | $M_w$ [g/mol] | $W_i$ [wt%] | $W_{i, yield}$ [wt%] |
|---|---|---|---|
| octene | 112.2 | 0.19 | 0.140 |
| octene | 112.2 | 0.11 | 0.082 |
| ethylbenzene | 92.1 | 0.08 | 0.064 |
| m-xylene | 92.1 | 0.10 | 0.078 |
| 1-nonene | 126.2 | 0.12 | 0.092 |
| nonane | 128.3 | 1.47 | 1.109 |
| nonene | 126.2 | 0.25 | 0.185 |
| nonene | 126.2 | 0.13 | 0.095 |
| 1-decene | 140.3 | 0.12 | 0.089 |
| decene | 140.3 | 0.05 | 0.036 |
| decene | 140.3 | 0.10 | 0.077 |
| decane | 142.3 | 1.29 | 0.972 |
| decene | 140.3 | 0.36 | 0.271 |
| decene | 140.3 | 0.17 | 0.131 |
| 1-undecene | 154.3 | 0.47 | 0.354 |
| undecene | 154.3 | 0.16 | 0.122 |
| undecane | 156.3 | 7.00 | 5.263 |
| undecene | 154.3 | 0.63 | 0.471 |
| undecene | 154.3 | 0.30 | 0.226 |
| 1-dodecene | 168.3 | 0.12 | 0.093 |
| dodecene | 168.3 | 0.08 | 0.060 |
| dodecane | 170.3 | 0.91 | 0.684 |
| dodecene | 168.3 | 0.22 | 0.162 |
| dodecene | 168.3 | 0.10 | 0.075 |
| tridecene | 182.3 | 0.20 | 0.147 |
| 1-tridecene | 182.3 | 0.11 | 0.086 |
| tridecane | 184.4 | 3.13 | 2.352 |
| tridecene | 182.3 | 0.23 | 0.170 |
| 1-tetradecene | 196.4 | 0.05 | 0.038 |
| tetradecene | 196.4 | 0.07 | 0.050 |
| tetradecane | 198.4 | 0.41 | 0.305 |
| butylated hydroxytoluene | 220.4 | 1.71 | 1.282 |
| pentadecane | 212.4 | 2.07 | 1.558 |
| methyl laurate | 214.3 | 0.69 | 0.519 |
| hexadecane | 226.4 | 0.23 | 0.175 |
| heptadecane | 240.5 | 1.31 | 0.988 |
| octadecane | 254.5 | 0.11 | 0.085 |
| 12-tricosanone | 338.6 | 1.67 | 1.253 |

As shown in Tables 3 and 4, the gas product contains a large amount of carbon dioxide, and a $C_{7-14}$ isohydrocarbon having a side chain, the isohydrocarbon serving as a bio-jet fuel, is generated in the liquid product. It was found that, when the catalyst of Example 1 was used, the bio-oil was hydrogenated, decarboxylated, decomposed, and isomerized.

<Test 3: Reaction Evaluation Test by Catalyst, Catalyst Amount, Reaction Pressure, and Reaction Time>

Next, Reforming Experiments 1 to 10 for bio-oils different from each other in catalyst, catalyst amount, reaction pressure, and reaction time were performed, and a catalyst, a catalyst amount, a reaction pressure, and a reaction time that were suitable were identified by evaluating the reaction. In each experiment, a reforming experiment was performed using 10.0 g of the bio-oil at a reaction temperature of 300°C and a stirring speed of 400 rpm.

<Experiment 1>

In Experiment 1, a catalyst adopting magnesium oxide was used as a solid base catalyst. A catalyst amount was set to 0.5 g, a hydrogen gas was sealed at a pressure of 1.0 MPa as a reaction pressure, and an experiment was performed for a reaction time of 3 hours.

<Experiment 2>

In Experiment 2, a catalyst adopting calcium oxide was used as a solid base catalyst. A catalyst amount was set to 0.5 g, a hydrogen gas was sealed at a pressure of 1.0 MPa as a reaction pressure, and an experiment was performed for a reaction time of 3 hours.

<Experiment 3>

In Experiment 3, a catalyst adopting barium oxide was used as a solid base catalyst. A catalyst amount was set to 0.5 g, a hydrogen gas was sealed at a pressure of 1.0 MPa as a reaction pressure, and an experiment was performed for a reaction time of 3 hours.

<Experiment 4>

In Experiment 4, a catalyst adopting magnesium oxide was used as a solid base catalyst. A catalyst amount was set to 1.0 g, a hydrogen gas was sealed at a pressure of 1.0 MPa as a reaction pressure, and an experiment was performed for a reaction time of 3 hours.

<Experiment 5>

In Experiment 5, a catalyst adopting magnesium oxide was used as a solid base catalyst. A catalyst amount was set to 1.0 g, a hydrogen gas was sealed at a pressure of 1.0 MPa as a reaction pressure, and an experiment was performed for a reaction time of 3 hours.

<Experiment 6>

In Experiment 6, a catalyst adopting magnesium oxide was used as a solid base catalyst. A catalyst amount was set to 1.0 g, nitrogen was sealed at 1 MPa without sealing of hydrogen, and an experiment was performed for a reaction time of 3 hours.

<Experiment 7>

In Experiment 7, a catalyst adopting magnesium oxide was used as a solid base catalyst. A catalyst amount was set to 1.0 g, a hydrogen gas was sealed at a pressure of 2.0 MPa as a reaction pressure, and an experiment was performed for a reaction time of 3 hours.

<Experiment 8>

In Experiment 8, a catalyst adopting magnesium oxide was used as a solid base catalyst. A catalyst amount was set to 1.0 g, a hydrogen gas was sealed at a pressure of 1.0 MPa as a reaction pressure, and an experiment was performed for a reaction time of 6 hours.

<Experiment 9>

In Experiment 9, a catalyst obtained by adopting magnesium oxide as a solid base catalyst and causing magnesium oxide to support platinum was used. A catalyst amount was set to 1.0 g, a hydrogen gas was sealed at a pressure of 1.0 MPa as a reaction pressure, and an experiment was performed for a reaction time of 6 hours.

<Experiment 10>

In Experiment 10, a catalyst obtained by subjecting the same catalyst as the catalyst used in Experiment 9 to hydrogen reduction treatment at a reaction temperature of 400°C for a reaction time of 3 hours was used. A catalyst amount was set to 1.0 g, a hydrogen gas was sealed at a pressure of 1.0 MPa as a reaction pressure, and an experiment was performed for a reaction time of 6 hours.

Evaluations of the above-mentioned experiments were performed from the following aspects.

-Evaluation of Activity

In the evaluation of activity, the evaluation was performed from three aspects: a fatty acid conversion rate ($x_{FFA}$); a fatty acid decarboxylation rate ($S_{DCO}$); and a carbon molar quantity rate ($Y_{JF}$) of a $C_{7-14}$ hydrocarbon. The fatty acid conversion rate ($x_{FFA}$) is used for identifying the degree of conversion of a free fatty acid in the bio-oil to the hydrocarbon. The fatty acid decarboxylation rate ($S_{DCO}$) is used for identifying the degree of the decarboxylation reaction of the fatty acid in the bio-oil. The carbon molar quantity rate ($Y_{JF}$) of the $C_{7-14}$ hydrocarbon is used for identifying the ratio of the carbon molar quantity of the $C_{7-14}$ hydrocarbon serving as a main component of the jet fuel in the liquid product with respect to the carbon molar quantity of all the compounds in the raw material (bio-oil). The evaluation enables identification of a suitable catalyst and a suitable method for producing the bio-jet fuel.

The fatty acid conversion rate ($x_{FFA}$), the fatty acid decarboxylation rate ($S_{DCO}$), and the carbon molar quantity rate ($Y_{JF}$) of the $C_{7-14}$ hydrocarbon are calculated by the equation 1, the equation 2, and the equation 3, respectively.

Equation 1

$$x_{FFA} = \left( 1 - \frac{\text{Fatty acid amount in liquid product } [\text{mol}]}{\text{Fatty acid amount in raw material } [\text{mol}]} \right) \times 100$$

Equation 2

$$S_{DCO} = \frac{\text{CO}_2 \text{ generation amount } [\text{mol}]}{\text{Reacted fatty acid amount } [\text{mol}]} \times 100$$

Equation 3

$$Y_{JF} = \frac{\text{Carbon molar quantity of } C_{7-14} \text{ hydrocarbon in liquid product } [\text{Cmol}]}{\text{Carbon molar quantity of all compounds in raw material } [\text{Cmol}]} \times 100$$

·Measurement and Evaluation of Amount of Coke on Used Catalyst

Evaluations of the respective experiments were performed by measuring the amount of coke on the used catalyst. When the amount of coke on the used catalyst is small, the catalyst has not lost its activity, and hence can withstand repeated use. When the amount of coke is large, the catalyst is deactivated at an early stage, and hence there is a risk in that the repeated use cannot be performed, and moreover, sufficient reforming treatment cannot be performed. The amount of coke was measured as follows: the remaining used catalyst was washed with tetrahydrofuran; the resultant was dried; and then the resultant was subjected to TG analysis. In the TG analysis, a generation amount of coke generated during the reaction can be measured by analyzing a weight reduction within the analysis temperature range.

The amount of coke on the used catalyst was measured through calculation from the following equation 2 using the numerical value thus obtained. Thus, a coke generation rate ($W_{coke}$) was calculated.

Equation 4

$$W_{coke}(\text{wt.\%}) = \frac{\text{Coke generation amount } [\mathbf{g}]}{\text{Loading amount of raw material } [\mathbf{g}]} \times \mathbf{100}$$

The results of evaluations of Experiments 1 to 10 with the mathematical equations 1 to 4 are shown in Table 5.

Table 5

| Expt. No. | Catalyst | Reaction condition | | | $X_{FFA}$ [%] | $S_{DCO}$ [%] | YJF [Cmol%] | $W_{coke}$ [wt.%] |
|---|---|---|---|---|---|---|---|---|
| | | $W_{cat}$ [g] | $P_{H2}$ [MPa] | $t_{rea}$ [h] | | | | |
| Expt. 1 | MgO(5) / ZSM-5 | 0.5 | 1 | 3 | 47.0 | 63.3 | 14.0 | 1.1 |
| Expt. 2 | CaO(5) / ZSM-5 | 0.5 | 1 | 3 | 68.9 | 62.2 | 17.4 | 1.8 |
| Expt. 3 | BaO(5) / ZSM-5 | 0.5 | 1 | 3 | 58.2 | 54.8 | 15.5 | 1.1 |
| Expt. 4 | MgO(5) / ZSM-5 | 1 | 1 | 3 | 86.4 | 57.5 | 22.6 | 1.2 |
| Expt. 5 | MgO(5) / ZSM-5 | 1.5 | 1 | 3 | 88.9 | 75.0 | 31.6 | 1.8 |
| Expt. 6 | MgO(5) / ZSM-5 | 1 | 0 | 3 | 69.8 | 55.7 | 16.5 | 0.9 |
| Expt. 7 | MgO(5) / ZSM-5 | 1 | 2 | 3 | 74.8 | 53.1 | 20.1 | 0.9 |
| Expt. 8 | MgO (5) / ZSM-5 | 1 | 1 | 6 | 83.4 | 68.1 | 25.2 | 3.5 |
| Expt. 9 | Pt(0.5) /MgO(5) /ZSM-5 | 1 | 1 | 6 | 83.1 | 60.6 | 19.0 | 3.2 |
| Expt. 10 | Pt(0.5) /MgO(5) /ZSM-5* | 1 | 1 | 6 | 86.5 | 56.6 | 21.6 | 1.8 |

First, as shown in Experiments 1 to 10, a $C_{7-14}$ hydrocarbon is observed in each experiment. Thus, it was recognized that a $C_{7-14}$ hydrocarbon for producing a bio-jet fuel was obtained by reforming a biomass-derived oil containing a free fatty acid, a hydrocarbon, and a triacylglycerol using a catalyst obtained by causing the solid acid catalyst to support a solid base catalyst.

<Contrast between Different Catalyst Amounts>

In order to obtain an evaluation result when the catalyst amounts were different, contrast was made between Experiment 1, Experiment 4, and Experiment 5 having the same conditions except the catalyst amount. In Experiment 1, the fatty acid conversion rate is 47.0%. In contrast, in each of Experiment 4 and Experiment 5, the fatty acid conversion rate is more than 85%. In addition, with regard to the fatty acid decarboxylation rate and the hydrocarbon amount, Experiment 5 is the highest. In view of the foregoing, it was recognized that the ratio of the catalyst with respect to the biomass-derived oil was preferably 5% or more, more preferably 10% or more, most preferably 15% or more.

<Contrast between Different Reaction Pressures>

In order to obtain an evaluation result when the reaction pressures were different, contrast was made between Experiment 1, Experiment 6, and Experiment 7 having the same conditions except the reaction pressure. It was recognized that, when the catalyst according to the present invention was used, a $C_{7-14}$ hydrocarbon was obtained even without the sealing of hydrogen, because the $C_{7-14}$ hydrocarbon was observed in each of Experiments 1, 6, and 7. In addition, it was also recognized that the reaction pressure was suitably set to 2.0 MPa because, in Experiment 7, all of the fatty acid conversion rate, the fatty acid decarboxylation rate, and the hydrocarbon amount were more excellent than those of Experiments 1 and 6.

<Contrast between Different Reaction Times>

In order to obtain an evaluation result when the reaction times were different, contrast was made between Experiment 4 and Experiment 8 having the same conditions except the reaction time. As a result, no remarkable changes were observed in the fatty acid conversion rates, fatty acid decarboxylation rates, and hydrocarbon amounts of Experiment 4 and Experiment 8. However, in Experiment 8, it was recognized that a large amount of coke adhered to the catalyst. It was recognized from the foregoing that the reaction time was suitably 6 hours or less, more suitably 3 hours.

<Contrast of Presence or Absence of Support of One or Plurality of Metals selected from Group 8, Group 9, and Group 10>

In order to investigate the influence on the reaction by the presence or absence of support of one or a plurality of metals selected from Group 8, Group 9, and Group 10 in the catalyst, contrast was made between Experiment 8, Experiment 9, and Experiment 10. As a result, in each of Experiment 9 and Experiment 10 in each of which platinum was supported, it was recognized that the adhesion amount of coke of the catalyst was reduced as compared to that in Experiment 8 in which no platinum was supported. In addition, in Experiment 10 in which the catalyst was caused to support platinum subjected to the hydrogen reduction treatment, the adhesion amount of coke was significantly reduced as compared to that in Experiment 8. It was recognized from the foregoing that one or a plurality of metals selected from Group 8, Group 9, and Group 10 were suitably supported, and the one or the plurality of metals selected from Group 8, Group 9, and Group 10 to be supported were more suitably subjected to the hydrogen reduction treatment in order to allow the catalyst to be used for a long period of time.

<Test 4: Reaction Evaluation Test using Reaction Temperature>

Next, using the catalyst used in Experiment 10, Experiment 11 having an amount of the bio-oil of 10.0 g, a catalyst amount of 1.0 g, a reaction pressure of 1.0 MPa, a stirring speed of 400 rpm, a reaction time of 6 hours, and a reaction temperature of 320°C, and a reforming experiment in which a reaction temperature was set to 340°C were performed. Contrast was made between the experiments and Experiment 10, and a suitable reaction temperature was identified by performing the evaluation of the reaction. The same evaluation as the evaluation in Test 3 was used. The results are shown in Table 6.

Table 6

| Expt. No. | Catalys t | Reaction | | $X_{FFA}$ [%] | $S_{DCO}$ [%] | $Y_{JF}$ [Cmol%] | $W_{coke}$ [wt.%] |
|---|---|---|---|---|---|---|---|
| | | $P_{H2}$ [MPa] | $T_{rea}$ [°C] | | | | |
| Expt. 10 | Pt/MgO/ ZSM-5 | 1 | 300 | 86.5 | 56.6 | 21.6 | 1.84 |
| Expt. 11 | Pt/MgO/ ZSM-5 | 1 | 320 | 91.8 | 12.0 | 18.9 | 1.52 |
| Expt. 12 | Pt/MgO/ ZSM-5 | 1 | 340 | 87.2 | 24.9 | 28.3 | 1.39 |

As shown in Table 6, high values of the fatty acid conversion rate and the hydrocarbon amount were shown in each of Experiments 10 to 12. In view of the foregoing, it was recognized that a temperature of from 300°C to 340°C was more preferred as the reaction temperature.

<Test 5: Observation Test of Isomerization Rate of Hydrocarbon>

Next, in Test 5, an isomerization rate of the oil was identified as follows: the catalyst used in Experiment 10, that is, the catalyst obtained by using ZSM-5-type zeolite as the solid acid catalyst and magnesium oxide as a solid base catalyst, causing the catalysts to support platinum, and subjecting the resultant to hydrogen reduction treatment at a reaction temperature of 400°C for a reaction time of 3 hours was used; and a fixed-bed flow type reaction apparatus illustrated in FIG. 5 for continuously supplying the bio-oil to a reaction furnace, and continuously emitting the liquid product and the gas product reformed in the reaction furnace was used. This test was performed under the following test conditions: a weight hourly space velocity was 2 h$^{-1}$; a reaction temperature was gradually changed between 300°C and 400°C; a hydrogen pressure was 1 MPa; and a hydrogen supply amount was set to a volume 500 times as large as that of the raw material. A hydrocarbon isomerization rate was calculated by dividing the carbon molar quantity of the $C_{7-14}$ isomerized hydrocarbon in the liquid product by the carbon molar quantity of all the hydrocarbons in the liquid product, and multiplying the resultant value by 100. The results of the above-mentioned Test 5 are shown in Table 7.

Table 7

| Catalyst | Reaction temperature [°C] | $Y_{JF}$ [Cmol%] | Hydrocarbon isomerization rate [Cmol%] |
|---|---|---|---|
| Pt/MgO/ZSM-5(39) | 300 | 10.09 | 34.78 |

(continued)

| Catalyst | Reaction temperature [°C] | $Y_{JF}$ [Cmol%] | Hydrocarbon isomerization rate [Cmol%] |
|---|---|---|---|
| Pt/MgO/ZSM-5(39) | 325 | 15.44 | 34.50 |
| Pt/MgO/ZSM-5(39) | 350 | 22.56 | 28.24 |
| Pt/MgO/ZSM-5(39) | 375 | 25.90 | 26.09 |
| Pt/MgO/ZSM-5(39) | 400 | 29.48 | 32.26 |

According to Table 7, a high isomerization rate was shown in any temperature region of the reaction temperature of from 300°C to 400°C, and hence it was shown that, according to the present invention, the $C_{7-14}$ isomerized hydrocarbon serving as a bio-jet fuel was able to be efficiently obtained.

## Claims

1. A method of producing a bio-jet fuel, comprising a reforming treatment step of subjecting a biomass-derived oil containing a free fatty acid, a hydrocarbon, and a triacylglycerol to decarbonation, hydrogenation, isomerization, and decomposition using a catalyst, which is obtained by causing a solid acid catalyst to support a solid base catalyst, under a condition of a reaction temperature of from 200°C to 450°C.

2. The method of producing a bio-jet fuel according to claim 1, wherein the biomass-derived oil is a bio-oil obtained by heating a biomass resource and cooling the generated pyrolysis gas.

3. The method of producing a bio-jet fuel according to claim 2, wherein the bio-oil is obtained by heating the biomass resource at from 200°C to 450°C and cooling the generated pyrolysis gas.

4. The method of producing a bio-jet fuel according to claim 2 or 3, wherein the bio-oil is obtained by heating the biomass resource using heating means including jetting a superheated steam and cooling the generated pyrolysis gas.

5. The method of producing a bio-jet fuel according to any one of claims 2 to 4, wherein the bio-oil is obtained by heating coconut fruit serving as the biomass resource and cooling the generated pyrolysis gas.

6. The method of producing a bio-jet fuel according to any one of claims 1 to 5, wherein a usage amount of the catalyst is from 5 wt% to 15 wt% with respect to the biomass-derived oil.

7. The method of producing a bio-jet fuel according to any one of claims 1 to 6, wherein the reforming treatment step is performed in a reaction vessel in which a hydrogen gas is sealed at a pressure of from 0 MPa to 2 MPa.

8. The method of producing a bio-jet fuel according to any one of claims 1 to 7, wherein the reforming treatment step is performed for a period of time in a range of from 3 hours to 6 hours.

9. The method of producing a bio-jet fuel according to any one of claims 1 to 8, wherein the solid acid catalyst of the catalyst is a zeolite.

10. The method of producing a bio-jet fuel according to claim 9, wherein the zeolite serving as the solid acid catalyst of the catalyst is ZSM-5-type zeolite.

11. The method of producing a bio-jet fuel according to any one of claims 1 to 10, wherein the solid base catalyst of the catalyst contains a Group 2 metal oxide.

12. The method of producing a bio-jet fuel according to claim 11, wherein the Group 2 metal oxide serving as the solid base catalyst of the catalyst is one kind or two or more kinds selected from magnesium oxide, calcium oxide, and barium oxide.

**13.** The method of producing a bio-jet fuel according to any one of claims 1 to 12, wherein the solid acid catalyst of the catalyst is caused to support one or a plurality of metals selected from Group 8, Group 9, and Group 10.

**14.** The method of producing a bio-jet fuel according to claim 13, wherein the one or the plurality of metals selected from Group 8, Group 9, and Group 10 to be supported on the solid acid catalyst of the catalyst are platinum.

**15.** A catalyst for producing a bio-jet fuel, comprising:

a solid acid catalyst; and
a solid base catalyst,
wherein the solid acid catalyst is caused to support the solid base catalyst.

**16.** The catalyst for producing a bio-jet fuel according to claim 15, wherein the solid acid catalyst is a zeolite.

**17.** The catalyst for producing a bio-jet fuel according to claim 16, wherein the zeolite is ZSM-5-type zeolite.

**18.** The catalyst for producing a bio-jet fuel according to any one of claims 15 to 17, wherein the solid base catalyst contains a Group 2 metal oxide.

**19.** The catalyst for producing a bio-jet fuel according to claim 18, wherein the Group 2 metal oxide is one kind or two or more kinds selected from magnesium oxide, calcium oxide, and barium oxide.

**20.** The catalyst for producing a bio-jet fuel according to any one of claims 15 to 19, wherein the solid acid catalyst is caused to support one or a plurality of metals selected from Group 8, Group 9, and Group 10.

**21.** The catalyst for producing a bio-jet fuel according to claim 20, wherein the one or the plurality of metals selected from Group 8, Group 9, and Group 10 to be supported on the solid acid catalyst are platinum.

# Fig.1

## DECARBOXYLATION REACTION

$$C_nH_mCOOH \xrightarrow{\text{Decarboxylation}} C_nH_{m+1} + CO_2$$

## (HYDRO)CRACKING

$$C_nH_m \xrightarrow{\text{Hydrocracking}} C_nH_b + C_xH_{xy}$$

## HYDRODEOXYGENATION REACTION

$$C_nH_mCOOH + 3H_2 \xrightarrow{\text{Hydrodeoxygenation}} C_{n+1}H_{2n+4} + 2H_2O$$

$$C_xH_yO + (x+2-0.5y)H_2 \xrightarrow{\text{Hydrodeoxygenation}} C_xH_{2x+2} + H_2O$$

Fig. 2

Fig.3

# Fig. 4

## INTERNATIONAL SEARCH REPORT

International application No.

**PCT/JP2022/041796**

### A. CLASSIFICATION OF SUBJECT MATTER

*C10G 3/00*(2006.01)i; *B01J 29/40*(2006.01)i; *B01J 29/44*(2006.01)i; *C11C 3/10*(2006.01)i
FI: C10G3/00 Z; C11C3/10; B01J29/44 M; B01J29/40 M

According to International Patent Classification (IPC) or to both national classification and IPC

### B. FIELDS SEARCHED

Minimum documentation searched (classification system followed by classification symbols)

C10G3/00; B01J29/40; B01J29/44; C11C3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-70022 A (TOKYO INST. OF TECHNOLOGY) 06 May 2021 (2021-05-06) claims, paragraphs [0002]-[0004], [0008], [0017], [0025], [0033], [0073], [0074], examples 1-7 | 15-21 |
| A | | 1-14 |
| A | WO 2021/083270 A1 (CHINA PETROLEUM & CHEMICAL CORPORATION) 06 May 2021 (2021-05-06) whole document | 1-21 |
| A | CN 102513132 A (FUZHOU DONGYE ENERGY TECHNOLOGY CO., LTD.) 27 June 2012 (2012-06-27) whole document | 1-21 |
| A | WO 2019/221287 A1 (HIBD LABORATORY ASSOC.) 21 November 2019 (2019-11-21) whole document | 1-21 |
| A | CN 105331387 A (BEIJING UNIVERSITY OF CHEMICAL TECHNOLOGY) 17 February 2016 (2016-02-17) whole document | 1-21 |

☑ Further documents are listed in the continuation of Box C.  ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **12 January 2023** | **24 January 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

| International application No. |
| --- |
| **PCT/JP2022/041796** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2010-121072 A (NIPPON OIL CORP.) 03 June 2010 (2010-06-03)<br>whole document | 1-21 |
| A | JP 2011-219708 A (GGI JAPAN KK) 04 November 2011 (2011-11-04)<br>whole document | 1-21 |
| P, A | WO 2022/004267 A1 (REVO INTERNATIONAL INC.) 06 January 2022 (2022-01-06)<br>whole document | 1-21 |

Form PCT/ISA/210 (second sheet) (January 2015)

**INTERNATIONAL SEARCH REPORT**
Information on patent family members

International application No.

**PCT/JP2022/041796**

| Patent document cited in search report | | | Publication date (day/month/year) | Patent family member(s) | | | Publication date (day/month/year) |
|---|---|---|---|---|---|---|---|
| JP | 2021-70022 | A | 06 May 2021 | (Family: none) | | | |
| WO | 2021/083270 | A1 | 06 May 2021 | US | 2022/0266224 | A1 | |
| | | | | whole document | | | |
| | | | | EP | 4052790 | A1 | |
| | | | | CN | 112742452 | A | |
| | | | | CN | 112742392 | A | |
| | | | | KR | 10-2022-0091584 | A | |
| | | | | CA | 3159650 | A1 | |
| | | | | JP | 2022-554292 | A | |
| CN | 102513132 | A | 27 June 2012 | (Family: none) | | | |
| WO | 2019/221287 | A1 | 21 November 2019 | US | 2021/0171844 | A1 | |
| | | | | whole document | | | |
| | | | | EP | 3795657 | A1 | |
| | | | | KR | 10-2020-0141087 | A | |
| | | | | CN | 112189046 | A | |
| | | | | SG | 11202011450R | A | |
| | | | | BR | 112020022177 | A2 | |
| | | | | JP | 2020-90660 | A | |
| CN | 105331387 | A | 17 February 2016 | (Family: none) | | | |
| JP | 2010-121072 | A | 03 June 2010 | US | 2011/0219677 | A1 | |
| | | | | whole document | | | |
| | | | | WO | 2010/058580 | A1 | |
| | | | | EP | 2351817 | A1 | |
| | | | | AU | 2009318697 | A | |
| | | | | KR | 10-2011-0099249 | A | |
| | | | | CN | 102264869 | A | |
| | | | | MY | 155295 | A | |
| JP | 2011-219708 | A | 04 November 2011 | (Family: none) | | | |
| WO | 2022/004267 | A1 | 06 January 2022 | (Family: none) | | | |

Form PCT/ISA/210 (patent family annex) (January 2015)

**EP 4 431 584 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011515539 A
- JP 2011526640 A
- JP 2015531430 A